# EUROPEAN PATENT APPLICATION

(11) **EP 4 571 946 A1**
(43) Date of publication of application: **18.06.2025**
(21) Application number: 23905474.5
(22) Date of filing: 31.10.2023
(51) Int. Cl.: H01M 10/6568, H01M 50/258

(54) **BATTERY PACK**

(30) Priority: 20.12.2022 CN 202223451295 U; 20.12.2022 CN 202211638766
(71) Applicant: Eve Power Co., Ltd., Jingmen, Hubei 448000 (CN)
(72) Inventor: HUANG, Weicai, Jingmen, Hubei 448000 (CN)
(74) Representative: Herrero & Asociados, S.L.
(86) International application number: PCT/CN2023/128314
(87) International publication number: WO 2024/131302

(57) **Abstract**

The present disclosure discloses a battery pack, including: a box side beam, which is provided with a receiving groove; a transition assembly including a transition pressing block and a liquid cooling pipe, the transition pressing block being connected to the liquid cooling pipe. The receiving groove includes a pipeline receiving groove and a pressing block receiving groove. The liquid cooling pipe is located within the pipeline receiving groove, and the transition pressing block is connected to the pressing block receiving groove, so as to keep the liquid cooling pipe relatively stationary relative to the box side beam.

## Description

The present disclosure claims priority to Chinese Patent Application No. 202211638766.3 filed with the China Patent Office on December 20, 2022, and Chinese Patent Application No. 202223451295.3 filed with the China Patent Office on December 20, 2022, the disclosures of which are incorporated herein by reference in their entireties.

### TECHNICAL FIELD

The present disclosure relates to the technical field of battery liquid cooling, and in particular to a battery pack.

### BACKGROUND

Battery packs are usually used in the field of electric vehicles. The maximum dimensions of a battery pack must meet the installation space requirements of the entire vehicle. Design considerations include the installation and maintenance of the battery pack. Therefore, without increasing the size of the vehicle, it is necessary to optimize the internal space of the battery pack to provide more space for the battery module to house batteries.

The internal space of related battery packs is limited, so many battery packs lack sufficient space for arranging the pipeline transition space of the liquid cooling system. Traditional methods of using liquid cooling pipes to connect the liquid cooling plates are difficult to meet the space design requirements. Moreover, due to space constraints, it is impossible to design a cable tie holder to fix the liquid cooling pipes, causing the liquid cooling pipes to wobble inside the battery pack, which can easily be scratched and cause leakage.

### SUMMARY

### Technical issues

In order to overcome at least one defect described in the above-mentioned prior art, the present disclosure provides a battery pack. It can solve the issue of space occupation by liquid cooling pipes inside the battery pack. At the same time, the liquid cooling pipes are fixed and transferred through transition pressing blocks, thereby improving the stability of the liquid cooling pipes, and reducing wobbling.

### Technical Solution

A battery pack includes: a box side beam, where the box side beam is provided with a receiving groove; a bottom plate, where the bottom plate and the box side beam enclose a receiving cavity; at least one battery module assembled within the receiving cavity; a liquid cooling plate manifold installed within the battery module; a transition assembly including a transition pressing block and a liquid cooling pipe, where the transition pressing block is connected to the liquid cooling pipe, and the liquid cooling pipe is in communication with the liquid cooling plate manifold; where the receiving groove includes a pipeline receiving groove and a pressing block receiving groove, where the liquid cooling pipe is located within the pipeline receiving groove, and a projection of the liquid cooling pipe onto the bottom plate is at least partially located in the box side beam; the transition pressing block is connected to the pressing block receiving groove, so that the liquid cooling pipe and the box side beam remain relatively stationary, and a projection of the transition pressing block onto the bottom plate is at least partially located in the box side beam.

### Beneficial Effects

1. By providing a receiving groove on the box side beam of the battery pack, the problem of space occupation by liquid cooling pipe transitions and liquid inlet/outlet within the battery module of the battery pack is solved;
2. By providing a transition pressing block to fix the liquid cooling pipe inside the receiving groove, the stability of the liquid cooling pipe inside the battery pack is improved, avoiding wobbling issues;
3. By providing a module connecting pressing block to connect the double-layer liquid cooling plate manifolds with the liquid cooling pipe, forming a liquid cooling loop, the problem of difficult connection of the liquid cooling pipe of the lower battery module is solved;
4. By providing a fixing structure on the edge of the module bracket of the battery module to fix the liquid inlet pipe and the liquid outlet pipe to the battery module, the problem of leakage caused by the delivery liquid inlet pipe and the delivery liquid outlet pipe being torn or scratched due to wobbling is solved.

### BRIEF DESCRIPTION OF THE DRAWINGS

FIG. 1 is a partial exploded structural schematic diagram according to some embodiments of the present disclosure;
FIG. 2 is a three-dimensional structural schematic diagram according to some embodiments of the present disclosure;
FIG. 3 is a top view structural schematic diagram according to some embodiments of the present disclosure;
FIG. 4 is a cross-sectional view taken along line A-A in FIG. 3;
FIG. 5 is a schematic diagram of the connection structure of the liquid cooling pipes and the delivery pipes according to some embodiments of the present disclosure;
FIG. 6 is a structural schematic diagram of a module connection pressing block according to some embodiments of the present disclosure;
FIG. 7 is a schematic diagram of the connection structure between the module connection pressing block and the cooling plate manifold according to some embodiments of the present disclosure;
FIG. 8 is an enlarged view of area B in FIG. 2.

Reference numerals:
1, shell; 11, box side beam; 111, pipeline receiving groove; 112, pressing block receiving groove; 113, step-shaped slot; 12, bottom plate; 2, transition assembly; 21, transition pressing block; 211, first transition pressing block; 2111, liquid inlet nozzle; 2112, liquid outlet nozzle; 212, second transition pressing block; 2121, connecting nozzle; 22, liquid cooling pipe; 221, liquid inlet pipe; 222, liquid outlet pipe; 31, delivery liquid inlet pipe; 32, delivery liquid outlet pipe; 33, quick connector; 4, module connecting pressing block; 41, pressing block body; 42, first nozzle; 43, second nozzle; 44, fixed bracket; 441, connecting hole; 5, battery module; 51, module bracket; 52, tray; 6, liquid cooling plate manifold; 61, connecting part; 62, pipeline; 63, summary connector; 7, fixed structure.

### DETAILED DESCRIPTION

In the description of the present disclosure, it should be noted that the orientation or positional relationship indicated by the terms "upper", "lower", "front", "rear", "left", "right", "vertical", "horizontal", "top", "bottom", "inside", "outside", etc., are based on the orientation or positional relationship shown in the accompanying drawings, and are only for the convenience of describing the present disclosure and simplifying the description, and do not indicate or imply that the device or element referred to must have a specific orientation, or be constructed and operated in a specific orientation, and therefore should not be understood as a limitation on the present disclosure.

In one embodiment, a battery pack includes: a box side beam, where the box side beam is provided with a receiving groove; a bottom plate, where the bottom plate and the box side beam enclose a receiving cavity; at least one battery module assembled within the receiving cavity; a liquid cooling plate manifold installed within the battery module; a transfer assembly including a transition pressing block and a liquid cooling pipe, where the transition pressing block is connected to the liquid cooling pipe, and the liquid cooling pipe is in communication with the liquid cooling plate manifold. The receiving groove includes a pipeline receiving groove and a pressing block receiving groove, where the liquid cooling pipe is located within the pipeline receiving groove, and a projection of the liquid cooling pipe onto the bottom plate is at least partially located in the box side beam, the transition pressing block is connected to the pressing block receiving groove, so that the liquid cooling pipe and the box side beam remain relatively stationary, and a projection of the transition pressing block onto the bottom plate is at least partially located in the box side beam.

By adopting the above solution, grooves are cut into the box side beam, and the liquid cooling pipes and the transition pressing blocks are installed in the grooves, the space occupied by the installation of the liquid cooling pipe and the transition pressing block inside the battery pack is reduced. At the same time, the liquid cooling pipe is fixed within the pipeline receiving grooves inside the box side beam using the transition pressing blocks, thereby avoiding wobbling of the liquid cooling pipe.

In one embodiment, the transition pressing block includes a first transition pressing block. The liquid cooling pipe includes a liquid inlet pipe and a liquid outlet pipe. The first transition pressing block is provided with a liquid inlet chamber, a liquid inlet nozzle, a liquid outlet chamber and a liquid outlet nozzle. The liquid inlet nozzle is configured to be connected to a cooling liquid main pipe outside the box side beam. The liquid inlet nozzle is in communication with the delivery liquid inlet pipe through the liquid inlet chamber, and the liquid outlet nozzle is in communication with the liquid outlet pipe through the liquid outlet chamber.

By adopting the above solution, the first transition pressing block is provided to connect the liquid inlet nozzle and the liquid outlet nozzle to a cooling liquid main pipe outside the battery pack, so as to realize the replacement of the cooling liquid within the liquid cooling pipe.

In one embodiment, a delivery liquid inlet pipe is further connected between the liquid inlet pipe and a liquid inlet of the liquid cooling plate manifold, and a delivery liquid outlet pipe is further connected between the liquid outlet pipe and a liquid outlet of the liquid cooling plate manifold.

By adopting the above solution, the cooling liquid in the liquid inlet pipe can be transferred to the liquid cooling plate manifold through the transfer liquid inlet pipe, and then transferred to the liquid outlet pipe through the delivery liquid outlet pipe.

In one embodiment, the transition pressing block further includes a second transition pressing block, two of which are provided and are respectively arranged at both ends of the pipeline receiving groove. The delivery liquid inlet pipe communicates with the liquid inlet pipe through the second transition pressing block, and the delivery liquid outlet pipe communicates with the liquid outlet pipe through the second transition pressing block.

By adopting the above solution, two second transition pressing blocks are provided to cooperate with the first transition pressing block to fix the liquid inlet pipe and the liquid outlet pipe respectively to avoid wobbling.

In one embodiment, the second transition pressing block is provided with a connecting nozzle, which is configured to be connected to the delivery liquid inlet pipe or the delivery liquid outlet pipe.

By adopting the above solution, the cooling liquid can be delivered to the battery module by connecting the delivery liquid inlet pipe or the delivery liquid outlet pipe through the connecting nozzle to achieve heat dissipation effect and cooling effect on the battery.

In one embodiment, the delivery liquid inlet pipe and the delivery liquid outlet pipe are both provided with a module connection pressing blocks for connecting the liquid cooling plate manifold in the battery module.

By adopting the above solution, the delivery liquid inlet pipe or the delivery liquid outlet pipe can be connected to and fixed to the liquid cooling plate manifold in the battery module.

In one embodiment, the battery module includes an upper battery module and a lower battery module arranged along a height direction of the battery pack. The liquid cooling plate manifold of the upper battery module and the liquid cooling plate manifold of the lower battery module are connected through the module connecting pressing block.

By adopting the above solution, the liquid cooling plate manifolds of the single-layer or double-layer battery modules can be connected through the module connecting pressing blocks.

In one embodiment, the module connecting pressing block includes: a pressing block body provided with a cavity; a first nozzle, where the first nozzle is in communication with the cavity of the pressing block body and is configured to to be in communication with the delivery liquid inlet pipe or the delivery liquid outlet pipe; a second nozzle, where the second nozzle is in communication with the cavity of the pressing block body and is configured to communicate with the liquid cooling plate manifold of the upper battery module and the liquid cooling plate manifold of the lower battery module; a fixed bracket, where the fixed bracket is connected to the pressing block body and is configured to be connected to the battery module.

By adopting the above solution, the communication effect among the delivery liquid inlet pipe, the delivery liquid outlet pipe, the module connecting pressing block and the liquid cooling plate manifold within the battery module can be achieved.

In one embodiment, the liquid inlet nozzle and the liquid outlet nozzle of the first transition pressing block are oriented toward an outside of the box side beam. An inner side of the box side beam is provided with a step-shaped slot. The "outside of the box side beam" refers to the side of the box side beam facing away from the receiving cavity, and the "inner side of the box side beam" refers to the side of the box side beam facing the receiving cavity.

By adopting the above solution, the stable installation effect of the first transition pressing block is improved, thereby achieving the fixing effect of the liquid cooling pipe.

Furthermore, the connecting nozzle of the second transition pressing block is oriented toward an inner side of the box side beam. The connecting nozzle, the liquid inlet nozzle and the liquid outlet nozzle are parallel.

By adopting the above solution, the connection and layout of the liquid cooling pipes on both sides of the inner and outer sides of the box side beam are realized, thereby improving.

In one embodiment, ends of the delivery liquid inlet pipe and the delivery liquid outlet pipe are both provided with quick connectors for quick connection and assembly of the delivery liquid inlet pipe and the delivery liquid outlet pipe.

By adopting the above solution, the assembly speed of the delivery pipe is increased by providing the quick connectors, making the assembly faster.

In one embodiment, in each of the module connecting pressing blocks, two second nozzles are provided. The second nozzles are arranged along a length direction of the module connecting pressing block and are configured to communicate with the liquid cooling plate manifold of the upper battery module and the liquid cooling plate manifold of the lower battery module.

By adopting the above solution, the double-layer liquid cooling plate manifolds in the battery module can be connected through the module connecting pressing block to form an integrated liquid cooling loop.

In one embodiment, the battery module is further provided with a fixing structure. The fixing structure connects the delivery liquid inlet pipe and the delivery liquid outlet pipe to the battery module to keep the delivery liquid inlet pipe, the delivery liquid outlet pipe and the battery module relatively still.

By adopting the above solution, the delivery liquid inlet pipe and the delivery liquid outlet pipe are fixed by a plurality of fixing structures, thereby avoiding issues such as pipe scratches and leakage caused by the wobbling of the delivery liquid inlet pipe and the delivery liquid outlet pipe.

In one embodiment, the battery module further includes a tray, and the fixing structure is arranged on the tray.

By adopting the above solution, the fixing structure is provided on the tray, enhancing the overall stability of the fixing structure.

In one embodiment, the fixing structure is a pipe support, which is configured to support and clamp the delivery liquid inlet pipe or the delivery liquid outlet pipe.

By adopting the above solution, the delivery liquid inlet pipe and the delivery liquid outlet pipe are fixed on the module bracket in a simple structure and low-cost manner.

In one embodiment, the battery module further includes a module bracket. The tray of the upper battery module and the tray of the lower battery module are connected via the module bracket.

By adopting the above solution, the upper battery module and the lower battery module can be connected, spliced and fixed to form a stable whole.

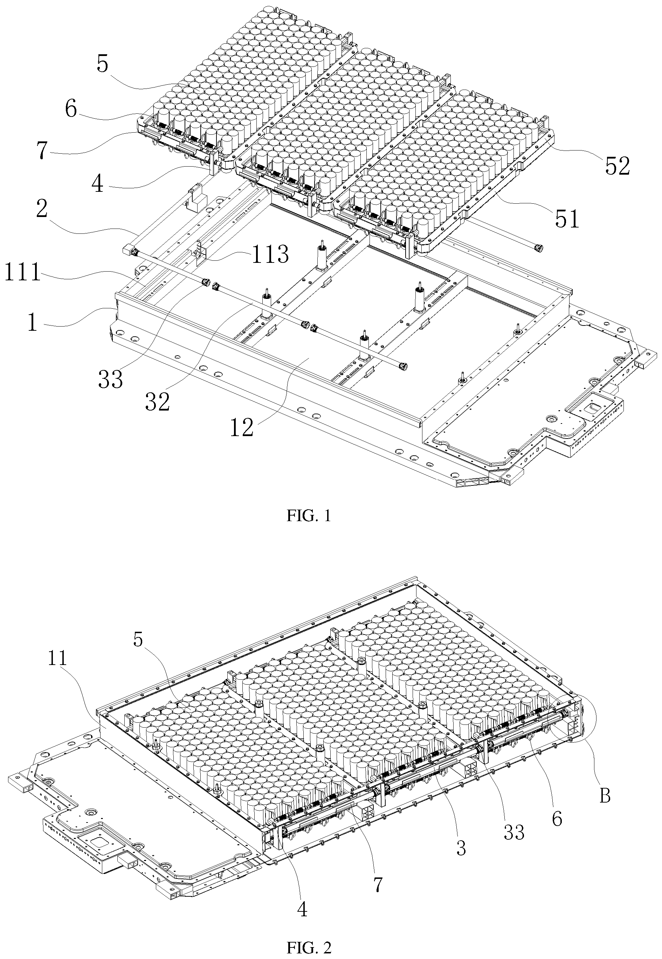

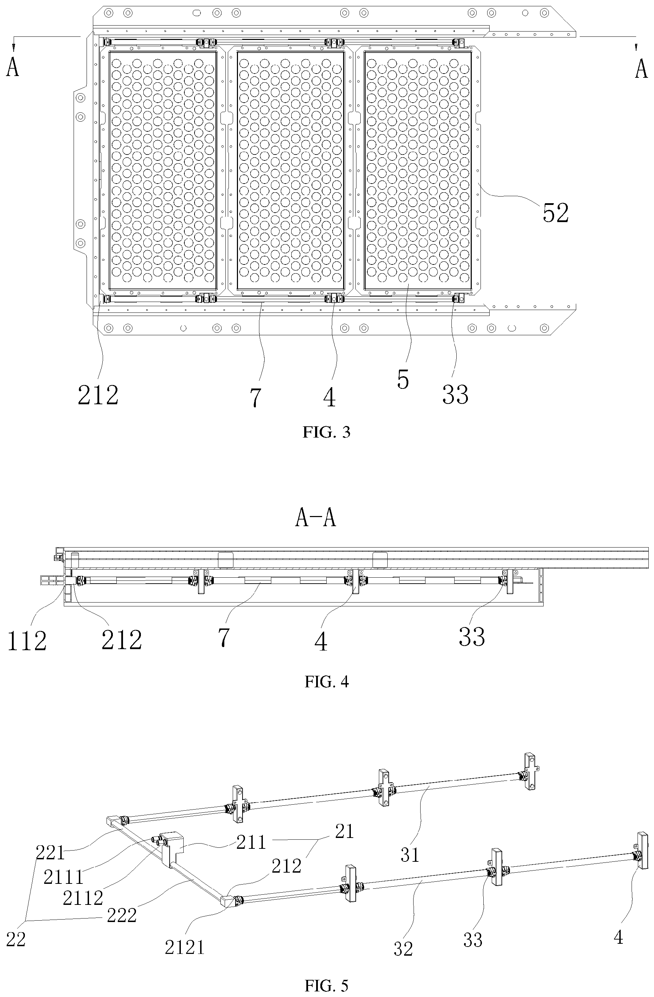

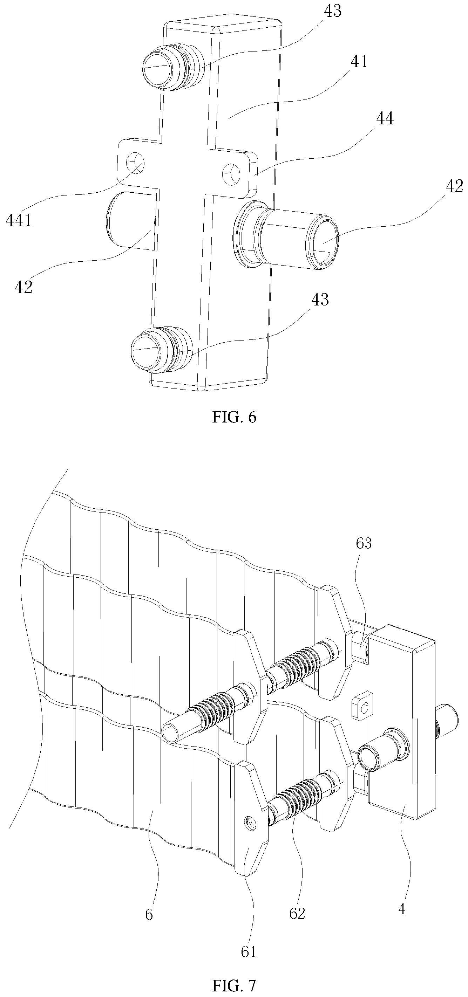

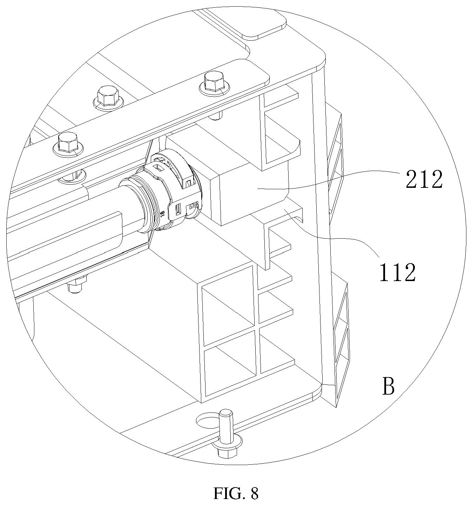

A battery pack of a first embodiment of the present disclosure, as shown in FIGs. 1 to 8, includes a box side beam 11, a bottom plate 12, a battery module 5, a liquid cooling plate manifold 6 and a transition assembly 2. The box side beam 11 is provided with a receiving groove. The bottom plate 12 and the box side beam 11 enclose a receiving cavity. At least one battery module 5 is provided and assembled within the receiving cavity. The liquid cooling plate manifold 6 is installed within the battery module 5. The transition assembly 2 includes a transition pressing block 21 and a liquid cooling pipe 22. The transition pressing block 21 is connected to the liquid cooling pipe 22, and their connection manner includes but is not limited to welding, snap-fit, adhesive bonding, threaded connection, and so on. The liquid cooling pipe 22 communicates with the liquid cooling plate manifold 6. The receiving groove includes a pipeline receiving groove 111 and a pressing block receiving groove 112. The liquid cooling pipe 22 is located within the pipeline receiving groove 111, and a projection of the liquid cooling pipe 22 onto the bottom plate 12 is at least partially located in the box side beam 11, the transition pressing block 21 is connected to the pressing block receiving groove 112, so that the liquid cooling pipe 22 remains relatively stationary with respect to the box side beam 11, and a projection of the transition pressing block 21 onto the bottom plate 12 is at least partially located in the box side beam 11. By adopting a structure where the box side beam 11 is slotted, the space occupied by the liquid cooling pipe 22 and the transition pressing block 21 inside the battery pack is reduced. At the same time, the liquid cooling pipe 22 is fixed within the pipeline receiving groove 111 inside the box side beam 11 using the transition pressing block 21, thereby avoiding wobbling of the liquid cooling pipe 22.

In the battery pack, it usually includes a shell 1 and a plurality of battery modules 5 located in the shell 1. The battery module 5 includes an upper battery module and a lower battery module arranged along a height direction of the battery pack. The upper battery module and the lower battery module are fixed by a module bracket 51. Specifically, each of the upper battery module and the lower battery module includes a tray 52, a plurality of cells arranged on the tray 52, and a plurality of liquid cooling plate manifolds 6 arranged between the cells. The tray 52 of the upper battery module and the tray 52 of the lower battery module are connected and fixed by the module bracket 51. Side surfaces of the liquid cooling plate manifold 6 are in contact with outer side walls of the cells. The shell 1 includes four box side beams 11, an upper cover (not shown) and the bottom plate 12. In this embodiment, the inner side of at least one of the box side beams 11 is provided with the pipeline receiving groove 111 and the pressing block receiving groove 112. The liquid cooling pipe 22 is installed inside the pipeline receiving groove 111. By using the transition pressing block 21 to fix the liquid cooling pipe 22 within the pipeline receiving groove 111, the overall stability of the liquid cooling pipe 22 is improved. Specifically, the transition pressing block 21 includes a first transition pressing block 211. The liquid cooling pipe 22 includes a liquid inlet pipe 221 and a liquid outlet pipe 222. The liquid inlet pipe 221 and the liquid outlet pipe 222 are embedded within the pipeline receiving groove 111. The first transition pressing block 211 is provided with a liquid inlet chamber, a liquid inlet nozzle 2111, a liquid outlet chamber and a liquid outlet nozzle 2112. The liquid inlet nozzle 2111 is configured to be connected to a cooling liquid main pipe outside the box side beam 11. The liquid inlet nozzle 2111 communicates with the liquid inlet pipe 221 through the liquid inlet chamber, and the liquid outlet nozzle 2112 communicates with the liquid outlet pipe 222 through the liquid outlet chamber. By arranging the first transition pressing block 211 to connect the liquid inlet nozzle 2111 and the liquid outlet nozzle 2112 to the outside of the battery pack, the replacement of the cooling liquid within the liquid cooling pipe 22 can be realized. A delivery liquid inlet pipe 31 is further connected between the liquid inlet pipe 221 and a liquid inlet of the liquid cooling plate manifold 6, and a delivery liquid outlet pipe 32 is further connected between the liquid outlet pipe 222 and a liquid outlet of the liquid cooling plate manifold 6. The cooling liquid in the liquid inlet pipe 221 can be transferred to the liquid cooling plate manifold 6 through the delivery liquid inlet pipe 31, and then transferred to the liquid outlet pipe 222 through the delivery liquid outlet pipe 32.

In one embodiment, the transition pressing block 21 further includes a second transition pressing block 212, two of which are provided and are respectively arranged at both ends of the pipeline receiving groove 111. The delivery liquid inlet pipe 31 communicates with the liquid inlet pipe 221 through the second transition pressing block 212, and the delivery liquid outlet pipe communicates with the liquid outlet pipe 222 through the second transition pressing block 212. By arranging the two second transition pressing blocks 212 to cooperate with the first transition pressing block 211, the liquid inlet pipe 221 and the liquid outlet pipe 222 are fixed respectively, avoiding wobbling.

Specifically, the liquid inlet nozzle 2111 and the liquid outlet nozzle 2112 of the first transition pressing block 211 are oriented toward the outside of the box side beam 11. The box side beam 11 includes a box side beam body and a box side beam protrusion. A bottom of the box side beam body protrudes towards the receiving cavity to form the box side beam protrusion. The module bracket 51 is connected and fixed to the box side beam protrusion. The box side beam 11 is provided with a step-shaped slot 113 on its inner side. That is, the step-shaped slot 113 extends from the box side beam protrusion to the box side beam body, and the height of the step-shaped slot 113 is greater than the height of the box side beam protrusion. The first transition pressing block 211 is stepped, and the shape of the step-shaped slot 113 is adapted to the shape of the first transition pressing block 211, so that the first transition pressing block 211 can be completely embedded within the step-shaped slot 113. The first transition pressing block 211 is welded and fixed within the step-shaped slot 113, which improves the stability of the first transition pressing block 211, thereby achieving the fixing effect of the liquid cooling pipe 22. The liquid inlet pipe 221 and the liquid outlet pipe 222 are both welded inside the first transition pressing block 211, and the liquid inlet pipe 221 and the liquid outlet pipe 222 are two independent channels, which form a closed loop by connecting with the liquid cooling plate manifold 6 in the battery module 5, so that the cooling liquid can enter the liquid inlet pipe 221 from the liquid inlet nozzle 2111, flow through the battery module 5 to absorb heat, and then flow back to the liquid outlet nozzle 2112 through the liquid outlet pipe 222, to achieve the replacement or heat exchange of the cooling liquid. The second transition pressing block 212 is provided with a connecting nozzle 2121, which is configured to be connected to the delivery liquid inlet pipe 31 or the delivery liquid outlet pipe 32. The connecting nozzle 2121 of the second transition pressing block 212 is oriented toward an inner side of the box side beam 11. The connecting nozzle 2121, the liquid inlet nozzle 2111 and the liquid outlet nozzle 2112 are parallel, realizing the connection and layout of the liquid cooling pipes 22 on both sides of the inner and outer sides of the box side beam 11, thereby maximizing the space utilization.

It should be noted that, in this embodiment, the liquid cooling pipe 22 is an aluminum pipe, which is light in weight, low in cost, and has good thermal conductivity. Of course, in other embodiments, other materials may also be selected.

The delivery liquid inlet pipe 31 and the delivery liquid outlet pipe 32 are both provided with a module connecting pressing block 4 for connecting with the liquid cooling plate manifold 6 in the battery module 5. By connecting the delivery liquid inlet pipe 31 and the delivery liquid outlet pipe 32 through the connecting nozzle 2121, the cooling liquid can be delivered to the battery module 5 to achieve heat dissipation effect and cooling effect on the battery.

The module connecting pressing block 4 includes a pressing block body 41, a first nozzle 42, a second nozzle 43 and a fixed bracket 44. The pressing block body 41 is provided with a cavity. The first nozzle 42 communicates with the cavity of the pressing block body 41 and is configured to communicate with the delivery liquid inlet pipe 31 or the delivery liquid outlet pipe 32. The second nozzle 43 communicates with the cavity of the pressing block body 41, and is configured to communicate with the liquid cooling plate manifold 6 of the upper battery module and the liquid cooling plate manifold 6 of the lower battery module in the battery module 5. The fixed bracket 44 is connected to the pressing block body 41, and is configured to be connected to the battery module 5. Communication effect among the delivery liquid inlet pipe 31, the delivery liquid outlet pipe 32, the module connecting pressing block 4 and the liquid cooling plate manifolds 6 within the battery module 5 can thus be realized. Each of the module connecting pressing blocks 4 is provided with two second nozzles 43, which are arranged along a length direction of the module connecting pressing block 4 and are configured to communicate with the double-layer liquid cooling plate manifolds 6 in the battery module 5. By connecting the double-layer liquid cooling plate manifolds 6 in the battery module 5 through the module connecting pressing block 4, an integral liquid cooling loop is formed.

In this embodiment, the delivery pipe 3 is a hose, and both ends of the delivery pipe 3 are provided with a quick connector 33, which can be quickly assembled and connected with the first nozzle 42 of the module connecting pressing block 4, and can also be quickly assembled and connected with the connecting nozzle 2121 on the second transition pressing block 212. By adopting a combination of multiple groups of module connecting pressing blocks 4 and the delivery pipes 3, the function of communicating with the liquid cooling plate manifolds 6 of multiple battery modules 5 can be achieved.

It should be noted that the battery pack can contain multiple battery modules 5 internally, which can be single-layer or double-layer. In each battery module, the liquid cooling plate manifolds 6 are arranged between rows of large cylindrical batteries. Each liquid cooling plate manifold 6 is provided with a connecting part 61 at its both ends. The connecting parts 61 on the same side of each liquid cooling plate manifold 6 are connected in series through a pipeline 62. Each pipeline 62 is provided with a summary connector 63. When using single-layer large cylindrical batteries, one second nozzle 43 in the module connecting pressing block 4 communicates with the liquid cooling plate manifold 6 through one summary connector 63, and the other second nozzle 43 can be sealed. When using double-layer large cylindrical batteries, each battery module 5 includes four summary connectors 63. Two of the summary connectors 63 on the same side of the battery module 5 are connected to the two second nozzles 43 on the same module connecting pressing block 4, thereby introducing cooling liquid into the liquid cooling plate manifold 6 in the battery module 5, solving the problem that the liquid cooling plate manifolds 6 of the lower battery in each battery module 5 are not suitable for connecting the liquid cooling pipes 22, and maximally reducing the space occupied by the cooling structure for the battery module 5.

It should be noted that, in this embodiment, the module connecting pressing block 4 includes two fixing brackets 44, and each fixing bracket 44 is provided with a connecting hole 441. The module connecting pressing block 4 can be fixed as a whole to the module bracket 51 by passing a screw through the connecting hole 441, thereby achieving a fixing effect on the module connecting pressing block 4 and improving the stability of the overall liquid cooling connector. In this embodiment, since the module connecting pressing block 4 is fixed on the side of the module bracket 51, the delivery liquid inlet pipe 31 and the delivery liquid outlet pipe 32 are located on the side of the module bracket 51. In order to further improve the stability of the delivery pipe 3, a fixed structure 7 is provided on the side of the module bracket 51 to clamp the delivery pipe 3, providing support for the delivery pipe 3. Of course, the fixing structure 7 can also be directly connected to the tray 52 on any one side or both sides to achieve its own fixing effect. Specifically, the fixing structure 7 is a pipe support with a U-shaped cross section, which can be used to support and clamp the delivery pipe 3. By fixing the delivery pipe 3 through the fixing structure 7, issues such as pipe scratches and leakage caused by the wobbling of the delivery pipe 3 itself are avoided. Of course, in other embodiments, the fixing structure 7 may be other structures that can fix the delivery pipe 3, and this application does not impose any specific limitation thereto.

In summary, the battery pack provided by the present disclosure has the following technical effects:
1. By providing a receiving groove on the box side beam 11 of the battery pack, the problem of space occupation by the liquid cooling pipe 22 and the transition pressing block 21 in the battery pack is solved;
2. By providing a transition pressing block 21 to fix the liquid cooling pipe 22 inside the receiving groove, the stability of the liquid cooling pipe 22 inside the battery pack is improved, avoiding wobbling issues;
3. By providing a module connecting pressing block 4 to connect the double-layer liquid cooling plate manifolds 6 with the liquid cooling pipe 22, forming a liquid cooling loop, the problem of difficult connection of the liquid cooling pipe 22 of the lower battery module is solved;
4. By providing a fixing structure 7 at the edge of the module bracket of the battery module 5 to fix the liquid inlet pipe 31 and the liquid outlet pipe 32 to the battery module 5, the problem of leakage caused by the delivery liquid inlet pipe 31 and the delivery liquid outlet pipe 32 being torn or scratched due to wobbling is solved.

## Claims

1. A battery pack, comprising:
a box side beam (11), wherein the box side beam (11) is provided with a receiving groove;
a bottom plate (12), wherein the bottom plate (12) and the box side beam (11) enclose a receiving cavity;
at least one battery module (5) assembled within the receiving cavity;
a liquid cooling plate manifold (6) installed within the battery module (5);
a transition assembly (2) comprising a transition pressing block (21) and a liquid cooling pipe (22), wherein the transition pressing block (21) is connected to the liquid cooling pipe (22), and the liquid cooling pipe (22) is in communication with the liquid cooling plate manifold (6);
wherein the receiving groove comprises a pipeline receiving groove (111) and a pressing block receiving groove (112); the liquid cooling pipe (22) is located within the pipeline receiving groove (111), and a projection of the liquid cooling pipe (22) onto the bottom plate (12) is at least partially located in the box side beam (11); the transition pressing block (21) is connected to the pressing block receiving groove (112), so that the liquid cooling pipe (22) remains relatively stationary with respect to the box side beam (11), and a projection of the transition pressing block (21) onto the bottom plate (12) is at least partially located in the box side beam (11).

2. The battery pack according to claim 1, wherein the transition pressing block (21) comprises a first transition pressing block (211); the liquid cooling pipe (22) comprises a liquid inlet pipe (221) and a liquid outlet pipe (222); the first transition pressing block (211) is provided with a liquid inlet chamber, a liquid inlet nozzle (2111), a liquid outlet chamber and a liquid outlet nozzle (2112); wherein the liquid inlet nozzle (2111) is configured to be connected to a cooling liquid main pipe outside the box side beam (11); the liquid inlet nozzle (2111) is in communication with the delivery liquid inlet pipe (221) through the liquid inlet chamber, and the liquid outlet nozzle (2112) is in communication with the liquid outlet pipe (222) through the liquid outlet chamber.

3. The battery pack according to claim 2, wherein a delivery liquid inlet pipe (31) is further connected between the liquid inlet pipe (221) and a liquid inlet of the liquid cooling plate manifold (6), and a delivery liquid outlet pipe (32) is further connected between the liquid outlet pipe (222) and a liquid outlet of the liquid cooling plate manifold (6).

4. The battery pack according to claim 3, wherein the transition pressing block (21) further comprises a second transition pressing block (212), two second transition pressing blocks (212) are provided, and are respectively arranged at both ends of the pipeline receiving groove (111); the delivery liquid inlet pipe (31) communicates with the liquid inlet pipe (221) through the second transition pressing block (212), and the delivery liquid outlet pipe communicates with the liquid outlet pipe (222) through the second transition pressing block (212).

5. The battery pack according to claim 4, wherein the second transition pressing block (212) is provided with a connecting nozzle (2121), which is configured to be connected to the delivery liquid inlet pipe (31) or the delivery liquid outlet pipe (32).

6. The battery pack according to claim 3, wherein the delivery liquid inlet pipe (31) and the delivery liquid outlet pipe (32) are both provided with a module connecting pressing block (4) for connecting with the liquid cooling plate manifold (6).

7. The battery pack according to claim 6, wherein the battery module (5) comprises an upper battery module and a lower battery module arranged along a height direction of the battery pack; the liquid cooling plate manifold (6) of the upper battery module and the liquid cooling plate manifold (6) of the lower battery module are connected through the module connecting pressing block (4).

8. The battery pack according to claim 7, wherein the module connection pressing block (4) comprises:
a pressing block body (41), wherein the pressing block body (41) is provided with a cavity;
a first nozzle (42), wherein the first nozzle (42) is in communication with the cavity of the pressing block body (41), and is configured to be in communication with the delivery liquid inlet pipe (31) or the delivery liquid outlet pipe (32);
a second nozzle (43), wherein the second nozzle (43) is in communication with the cavity of the pressing block body (41), and is configured to be in communication with the liquid cooling plate manifold (6) of the upper battery module and the liquid cooling plate manifold (6) of the lower battery module;
a fixed bracket (44), wherein the fixed bracket (44) is connected to the pressing block body (41) and is configured to be connected to the battery module (5).

9. The battery pack according to claim 2, wherein the liquid inlet nozzle (2111) and the liquid outlet nozzle (2112) of the first transition pressing block (211) are oriented toward an outside of the box side beam (11); the box side beam (11) is provided with a step-shaped slot (113) on its inner side.

10. The battery pack according to claim 5, wherein the connecting nozzle (2121) of the second transition pressing block (212) is oriented toward an inner side of the box side beam (11); the connecting nozzle (2121), the liquid inlet nozzle (2111) and the liquid outlet nozzle (2112) are parallel.

11. The battery pack according to claim 3, wherein ends of the delivery liquid inlet pipe (31) and the delivery liquid outlet pipe (32) are both provided with quick connectors (33) for quick connection and assembly of the delivery liquid inlet pipe (31) and the delivery liquid outlet pipe (32).

12. The battery pack according to claim 8, wherein, in each of the module connecting pressing blocks (4), two second nozzles (43) are provided; wherein the second nozzles (43) are arranged along a length direction of the module connecting pressing block (4) and are configured to communicate with the liquid cooling plate manifold (6) of the upper battery module and the liquid cooling plate manifold (6) of the lower battery module.

13. The battery pack according to claim 7, wherein the battery module is further provided with a fixing structure (7), wherein the fixing structure (7) connects the delivery liquid inlet pipe (31) and the delivery liquid outlet pipe (32) to the battery module, so as to keep the delivery liquid inlet pipe (31), the delivery liquid outlet pipe (32) and the battery module relatively still.

14. The battery pack according to claim 13, wherein the battery module further comprises a tray (52); wherein the fixing structure (7) is arranged on the tray (52).

15. The battery pack according to claim 13, wherein the fixing structure (7) is a pipe support, which is configured to support and clamp the delivery liquid inlet pipe (31) or the delivery liquid outlet pipe (32).

16. The battery pack according to claim 14, wherein the battery module (5) further comprises a module bracket (51), wherein the tray (52) of the upper battery module and the tray (52) of the lower battery module are connected via the module bracket (51).

17. The battery pack according to claim 16, wherein the module connection pressing block (4) comprises:
a pressing block body (41), wherein the pressing block body (41) is provided with a cavity;
a first nozzle (42), wherein the first nozzle (42) is in communication with the cavity of the pressing block body (41), and is configured to be in communication with the delivery liquid inlet pipe (31) or the delivery liquid outlet pipe (32);
a second nozzle (43), wherein the second nozzle (43) is in communication with the cavity of the pressing block body (41), and is configured to be in communication with the liquid cooling plate manifold (6) of the upper battery module and the liquid cooling plate manifold (6) of the lower battery module;
a fixed bracket (44), wherein the pressing block body (41) is connected to the module bracket (51) via the fixed bracket (44).
